# EUROPEAN PATENT APPLICATION

(11) **EP 4 253 461 A1**
(43) Date of publication of application: **04.10.2023**
(21) Application number: 23164538.3
(22) Date of filing: 28.03.2023
(51) Int. Cl.: C08J 11/22, C09J 123/12, B32B 5/02, B32B 5/26, B32B 7/12, D06N 7/00, B29B 17/00

(54) **METHOD FOR MANUFACTURING A HOT-MELT ADHESIVE THAT IS USED IN THE PRODUCTION OF RECYCLABLE TEXTILE PRODUCTS MADE OF POLYPROPYLENE**

(30) Priority: 30.03.2022 BE 202205231
(71) Applicant: Balta Industries Nv, 8710 Sint-Baafs-Vijve (BE)
(72) Inventor: EGGERMONT, Rudy, 8540 Deerlijk (BE); DEGRIECK, Berend, 8540 Deerlijk (BE)
(74) Representative: Chielens, Kristof

(57) **Abstract**

The present invention relates to a method for manufacturing a hot-melt adhesive for textile products, wherein the method comprises the following steps: comminution of carpets made of isotactic polypropylene to polypropylene granules; extrusion of the granules in the presence of peroxides in order to lower the viscosity to a melt viscosity from 10 000 mPa*s to 120 000 mPa*s at a temperature of 210°C measured according to ISO 6721-10:2015.

## Description

The present invention relates to a method for manufacturing a hot-melt adhesive for textile products. The hot-melt adhesive obtained by the method is particularly suitable for application in the forming (production) of textile products made of polypropylene, which at the end of their lifespan can be recycled to polypropylene granules that are again perfectly suitable for forming high-grade products.

The hot-melt adhesive obtained by the method according to the invention serves in particular as an adhesive in a textile product comprising a primary backing layer with yarns or fibres made of an isotactic polypropylene material and a secondary backing layer made of an isotactic polypropylene material, wherein the primary and secondary backing layers are firmly bonded together by said adhesive.

The present invention further relates to a textile product, preferably a recyclable textile product, in the form of a carpet, a carpet tile, fabric or non-woven material made of isotactic polypropylene (PP) that comprises a hot-melt adhesive that was obtained by the method according to the invention. The textile product according to the present invention preferably comprises a tufted, woven, knitted or needled top layer.

The present invention further relates to a method for manufacturing said textile product.

A further subject matter of the present invention relates to a method for manufacturing a hot-melt adhesive from polypropylene material, preferably recycled polypropylene.

The reuse of carpets, carpet tiles and/or rugs is essential in a recyclable economy. However, these products are difficult to recycle because they comprise mixtures of various plastics, binders, inorganic fillers and fibres. Thus, if we wish to recycle carpets and the like, there should first be preliminary separation and sorting on the basis of composition, so that a relatively pure stream of a single polymer component can be recovered. Many of the existing recycling techniques are based on mechanical deconstruction of the carpet in order to isolate the various components, for example as described in EP 3 235 615 or in US 9,550,872.

A number of solutions are described in the prior art in order to limit preliminary separation as much as possible and increase the recyclability. Thus, the American patent publication US2007/0141323 describes a carpet or rug based on polyolefins that can be manufactured using an aqueous dispersion of a polyolefin, so that the recyclability of the components is improved.

International patent publication WO 93/12285 describes a fully recyclable tufted carpet and a method for the production and use thereof, wherein all components belong to the same polymer family and the adhesive is applied in the form of a paste with a water-based formulation.

International patent publication WO 93/15909 also describes a fully recyclable carpet whose primary backing layer, secondary backing layer and the adhesive belong to the same polymer family, and they all comprise an isotactic polypropylene polymer. The first coat applied is an extruded film. A drawback of this manner of attachment is that the bond of the individual fibres in the yarns is not always sufficient and an additional coating step is necessary, which in this technical field is known as pre-coating. Pre-coating may be carried out using an aqueous dispersion of for example a polyolefin dispersion, but also with a polymer hot-melt adhesive with very low viscosity to ensure the necessary penetration.

The known textile production processes and in particular the carpet production processes for obtaining fully recyclable textile (carpet) products still have problems in obtaining sufficient dimensional stability and good pile and fibre anchoring, mainly on account of the adhesives or the attachment method employed. The aim of the present invention is therefore to provide a method for manufacturing a hot-melt adhesive for textile products that no longer has these drawbacks. Preferably, the textile products that comprise said hot-melt adhesive should at the end of their life be recyclable to granules that are suitable for the manufacture of high-grade products.

German patent publication DE 37 42 845 A1 describes a fibre-reinforced polypropylene (PP) film that is manufactured by decomposing PP waste to a melt flow index (MFI) of 100-800 g/10 minutes, by means of peroxides.

The aim of the invention is achieved by providing a method for manufacturing a hot-melt adhesive for textile products, wherein it comprises the following steps: comminution of carpets made of polypropylene to polypropylene granules, extrusion of the granules in the presence of peroxides in order to lower the viscosity to a melt viscosity from 10 000 mPa*s to 120 000 mPa*s at a temperature of 210°C measured according to ISO 6721-10:2015. The hot-melt adhesive obtained preferably has a melt viscosity from 15 000 mPa*s to 115 000 mPa*s at a temperature of 210°C. The carpet made of polypropylene is preferably a carpet made of isotactic polypropylene. The comminution of the carpets will take place by mechanical recycling for example as described in US 2017/0305038 A1.

Within the context of the present invention, the term "a carpet made of polypropylene" means a carpet that is made substantially of polypropylene, and preferably comprises polypropylene to at least 95%.

The polypropylene granules obtained may, depending on the composition of the carpet that is to undergo comminution, sometimes comprise some latex or chalk residues. In a preferred embodiment the polypropylene granules obtained comprise at least 85 wt% polypropylene, more particularly at least 90 wt% polypropylene. According to a most preferred embodiment the polypropylene granules obtained comprise at least 99 wt% polypropylene.

In a preferred embodiment, the polypropylene granules are only obtained by comminution of only carpets made of polypropylene. In a more preferred embodiment, the polypropylene granules are obtained by the comminution of carpets made of polypropylene and the comminution of other products made of polypropylene, such as: packaging material, cords, yarns, non-wovens, etc. made of polypropylene.

With the measurement technique: ISO 6721-10:2015, we obtain the complex viscosity (mPa*s) as a function of temperature. According to this measurement technique, measurement is carried out between two parallel plates (25 mm) with a gap of 1 mm. It is measured with oscillation with constant tension (5%) as the parameter, a constant angular frequency (10 rad/s) and a cooling rate of 3°C/min.

If the quality of the recycled polypropylene derived from the comminution of polypropylene carpets is inadequate, in a preferred embodiment the method comprises the extra method step of adding new polypropylene to the polypropylene granules derived from the comminution of polypropylene carpets. In a preferred embodiment the polypropylene granules comprise 80 wt% of recycled polypropylene. Said recycled polypropylene is preferably derived from the comminution of PP carpets. In an alternative embodiment said recycled PP is derived from other textile sources made of PP, such as for example old yarn, non-wovens, production waste, cords, etc.

In a preferred embodiment said granules comprise 0% fillers. In an alternative embodiment said granules also comprise a quantity of fillers. The favourite fillers include titanium dioxide, calcium carbonate, barium sulphate, silica, silicon dioxide, carbon black, sand, glass beads, mineral aggregates, talc, clay and the like.

The use of said fillers in the granules may vary from about 0.1% to as high as about 70%. These fillers are desirable when the adhesive is used for heavier coatings, e.g. for carpet tiles or carpet without secondary backing made of woven or non-woven textile. During recycling, these backings are then separated from the fibres by mechanical processing, and are reused. For application with recyclable carpets, the aim is to use the least possible amount of fillers, preferably 0% fillers, more particularly at most 1% fillers.

In a particular embodiment of the method, said granules comprise adhesives as known by a person skilled in the art.

More particularly, the granules further comprise adhesion promoters such as e.g. maleated polypropylene and other polyolefin polymers containing acid groups. Chemical blowing agents or thermally expanding microspheres may also be added to said granules. Moreover, pigments, such as e.g. carbon black, titanium dioxide and other pigments or dyes may be added to said granules.

The present invention also relates to the use of an isotactic polypropylene hot-melt adhesive that has a melt viscosity from 10 000 mPa*s to 120 000 mPa*s at a temperature of 210°C measured according to ISO 6721-10:2015, in the forming of a textile product comprising a primary backing layer with yarns or fibres made of an isotactic polypropylene material and a secondary backing layer made of an isotactic polypropylene material, wherein the primary and secondary backing layers are firmly bonded together by said isotactic polypropylene hot-melt adhesive. Said isotactic hot-melt adhesive is preferably manufactured by the method as defined in claim 1.

Said isotactic hot-melt adhesive, preferably the hot-melt adhesive manufactured by the method as defined in claim 1, is particularly suitable for application for floor covering products.

The invention further relates to a textile product comprising a primary backing layer with yarns or fibres made of an isotactic polypropylene material and a secondary backing layer made of an isotactic polypropylene material, wherein the primary and secondary backing layers are firmly bonded together by an adhesive, wherein the adhesive is an isotactic polypropylene hot-melt adhesive that has a melt viscosity from 10 000 mPa*s to 120 000 mPa*s at a temperature of 210°C measured according to ISO 6721-10:2015, and wherein said hot-melt adhesive was applied by roller coating at a temperature between 190°C and 210°C, preferably at a temperature of 200°C. Application of the hot-melt adhesive by roller coating offers the advantage that there is better contact between the hot-melt adhesive and the yarns and individual fibres, yarns of the primary backing layer. The lower temperatures (190°-210°C) that are used in the processing of the hot-melt adhesive offer the advantage that there is no negative effect on the stability of the textile product. At higher temperatures, especially temperatures of 230°C-250°C, there may well be negative effects on the stability of the textile product through thermal shrinkage of polypropylene-based yarns in the woven or non-woven primary backing layer or woven carpet.

The textile product according to the invention preferably comprises a primary backing layer with yarns or fibres in the form of cut or uncut loops that extend upwards from the primary backing layer and a secondary backing layer behind the primary backing layer. However, it may also be a woven structure, built up from polypropylene threads and yarns.

The hot-melt adhesive is applied by roller coating. The isotactic polypropylene hot-melt adhesive according to the invention preferably comprises at least 35 wt% and at most 90 wt% of isotactic polypropylene. Said hot-melt adhesive more particularly comprises at least 45 wt%, at least 55 wt%, and more particularly at least 65 wt% of isotactic polypropylene. Most particularly, the amount of isotactic polypropylene in the hot-melt adhesive is between 70 wt% and 75 wt%. The isotactic polypropylene employed may be pure (new) isotactic polypropylene, recycled isotactic polypropylene, or a mixture of pure and recycled isotactic polypropylene.

By using said hot-melt adhesive, which is applied by roller coating, there may in one step be bonding between the primary and secondary backing layers and anchoring of the yarns or fibres of the primary backing layer. The hot-melt adhesive used is suitable for being applied at lower temperatures, preferably in the temperature range 150°C-215°C, more particularly in the temperature range 190°C-210°C, without damaging the yarns and/or fibres and/or the carpet structure. The primary backing layer of the textile product according to the invention is preferably a tufted, woven or needled layer.

The adhesive has sufficient fluidity to penetrate well into the primary and secondary layers using a roller. Good penetration of the two layers leads to good fibre bonding/pile bonding with sufficient binding force.

The delamination force is the force required to break the bond between the primary and secondary layers so that the backing and the surface fibres can be separated from each other. The textile product has a dry delamination strength of at least 30N. From tests carried out by the applicant, according to standard ISO 11857, it was found that the delamination strength could not be measured without destroying the textile product.

Moreover, the adhesion of the surface fibres is so high that the secondary layer has to be destroyed in order to remove it.

Owing to its composition, the textile product according to the invention can be recycled perfectly by direct mechanical recycling, wherein the textile product can be comminuted mechanically by one of the known techniques, without the need for prior processing. The resultant recycled polypropylene granules (rPP) can be used integrally for the production of new fibres or other high-grade articles for which the colour is less critical. The recycled PP may also be used for the production of adhesive that can be applied in the textile product as defined in claim 1. Thus, in a preferred embodiment, the adhesive in the textile product according to the invention comprises 5 wt% to 85 wt% of recycled polypropylene.

The secondary backing layer, also called the backing material or sublayer, is preferably a cloth made of woven or non-woven isotactic polypropylene material. The secondary layer will ensure improved dimensional stability of the textile product. The formed textile product is usable in particular in the carpet industry, especially for needlefelt, woven and/or tufted carpets and carpet tiles, including artificial grass.

Another subject matter of the present invention relates to a method for forming a textile product, comprising the following steps:
- providing a primary backing layer with yarns or fibres made of an isotactic polypropylene material;
- providing a secondary backing layer made of an isotactic polypropylene material,
- bringing adhesive into contact with the primary or secondary layer, wherein the adhesive is an isotactic polypropylene hot-melt adhesive that has a melt viscosity from 10 000 mPa*s to 120 000 mPa*s at a temperature of 210°C measured according to ISO 6721-10:2015, wherein the hot-melt adhesive is applied in one step by roller coating, wherein during application the hot-melt adhesive has a temperature of at least 150°C and at most 215°C, more particularly has a temperature of 190°C-210°C.

The present invention further relates to a hot-melt adhesive for textile products, comprising at least 35 wt% and at most 90 wt% of isotactic polypropylene, and at least 10 wt% of rheology modifiers, wherein said hot-melt adhesive has a melt viscosity from 10 000 mPa*s to 120 000 mPa*s at a temperature of 210°C measured according to ISO 6721-10:2015.

The present invention also relates to the method for manufacturing a hot-melt adhesive for textile products, wherein the method comprises the following steps: comminution of polypropylene carpets to polypropylene granules, extrusion of the granules in the presence of peroxides in order to lower the viscosity to a melt viscosity from 10 000 mPa*s to 120 000 mPa*s at a temperature of 210°C measured according to ISO 6721-10:2015.

The present invention is now explained in more detail on the basis of the following detailed description of a number of possible embodiments of the textile product, the method for the manufacture thereof and of the hot-melt adhesive according to the present invention. The purpose of this description is exclusively to provide illustrative examples and to point out further advantages and features, and may thus by no means be interpreted as a limitation of the scope of the invention or of the patent rights claimed in the claims.

In this description, reference is made to the appended drawings, wherein:

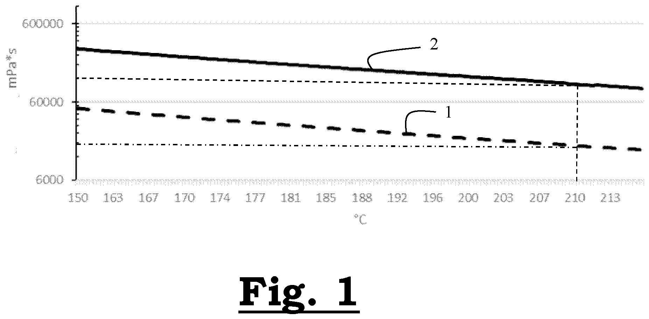

- ***Fig. 1******:** shows a graph showing the (complex) melt viscosity of two different adhesives that are manufactured and applied according to the present invention, in a temperature range between 150°C and 215°C.*

The present invention relates to a textile product, preferably a floor covering material that is produced using isotactic polypropylene for all constituents of the product, in particular the yarns, primary and secondary carriers and the first coat that bonds the primary and secondary layers (carriers). Isotactic propylene is mainly used for the first coat, which replaces latex.

The textile product according to the invention is preferably a carpet, or modular carpet or rug, which is made by attaching a woven, non-woven or tufted layer, which contains the pile fibres and which forms the primary layer (top layer), to a woven or non-woven secondary structure that forms the secondary layer (sublayer), by means of a hot-melt adhesive made mainly of isotactic polypropylene, new (pure) or recycled PP. The hot-melt adhesive is applied by a suitable hot-melt adhesive application technology. In a preferred embodiment, use is made of roller coating technology, but other technologies are possible.

The hot-melt adhesive consists mainly (> 10 wt% < 90 wt%) of isotactic polypropylene, newly produced or recycled, for example polypropylene from carpet waste, whose rheology is altered by suitable technology, e.g. a visbreaking method (method that will lower the viscosity of the polymer stream). By using a visbreaking method, a hot-melt adhesive is obtained consisting of an ordinary isotactic polypropylene, even of recycled origin, which can be applied even at lower temperatures, without damaging the yarns and the carpet structure. In addition, good fibre and pile bonding and good adhesion of the various layers can be assured in one single application.

The desired viscosity of the hot-melt adhesive for application within the context of the present invention is achieved by means of radical-forming compounds, such as e.g. organic peroxides or (sterically hindered) hydroxylamine esters, addition of a quantity of flexibilizing polymers that are compatible with polypropylene homopolymer, and supplementary compounds such as hydrocarbon tackifiers (adhesiveness enhancers), antioxidants, fatty acids, odour-neutralizing agents, and optionally other known additives.

For this application, preferably copolymers of polypropylene with a small amount (preferably less than 10%) of polyethylene or another alpha-olefin are used. Optionally a metallocene polypropylene with the desired rheology in the melted state may be added, for example Metocene MF650Y (Lyondell Basel) or equivalent. The viscosity may also be lowered by adding silicon nanoparticles (Sachin Jain, Johannes G. P. Goossens, Gerrit W. M. Peters, be Martin van Duincd and Pieter J. Lemstraa in Soft Matter, 2008, 4, 1848-1854).

The hot-melt adhesive used could also comprise homo- or co-polypropylene with maleic acid anhydride groups or carboxyl groups.

The hot-melt adhesive used may contain up to 70 wt% fillers, preferably 0.5-60 wt% fillers, that are resistant to the temperature of the melt (150°C-220°C) of the hot-melt adhesive and will be used as coating. However, a hot-melt adhesive with at most 1% fillers, more particularly at most 0.5% fillers, and most particularly 0% fillers, is preferred. Recycling to fibre production will again be possible, but requires a filtering step in the remelting process, so that the particle size is limited. In an alternative embodiment the coating may be separated from the fibres mechanically, and the coating may be reused for the same purpose or in another application. In all cases the remelted carpet will be usable in other non-fibre applications employing other plastic-forming technologies, or may be mixed with other polypropylene polymers to obtain the required properties. Usual fillers are calcium carbonate, talc, barium sulphate, anhydrous calcium sulphate, carbon black, and others. Functional fillers may be added (fire-retardant, antistatic, UV and others).

The hot-melt adhesive used may be made from new polypropylene, from recycled polypropylene, for example from recycled carpet and waste from carpet production, or from a combination of both. In a preferred embodiment, the hot-melt adhesive comprises 80 wt% of recycled polypropylene. The amount of recycled polypropylene depends on the quality of the recycled material.

In a preferred variant, the hot-melt adhesive does not comprise any fillers (0 wt%). When the textile product produced uses said hot-melt adhesive, the resultant textile product may be recycled to fibres at the end of its life. The applicant found, surprisingly, that the presence of shorter-chain polypropylene, obtained after the visbreaking method, and presence of the polypropylene copolymer modifier, and other optional additives, does not disturb fibre formation during extrusion. Staple fibres and continuous filament yarns are made using standard industrial equipment and on trial installations.

The hot-melt adhesive used in the present invention is suitable for application at a temperature of at least 150°C and at most 215°C, preferably between 160°C -210°C, more preferably between 180°C and 210°C. The processing temperatures employed will not affect the primary backing layer (top layer) and secondary backing layer of the textile product, but will ensure good bonding of yarn filaments and yarns, even if it is a woven carpet.

The hot-melt adhesive used may be applied as a priming or adhesive layer that makes it possible to attach fibres together, to laminate with a (textile) substrate, or may solidify as a final coating, so that further relief may be applied.

After application on a carrier, this hot-melt adhesive can be reactivated by means of a heat source for further lamination or adhesion purposes. Known heat sources are for example hot air, infrared radiation, contact with a hot roll, drum or blade. Various applications are possible on non-woven coated material with this hot-melt adhesive. The whole product is fully recyclable.

The process may be further improved with a preheating process (infrared/hot air/calender etc.) of the laminating substrates so that better penetration/adhesion is obtained. Controlled cooling of the hot-melt adhesive after laminating is important (for the dimensional stability of the fabric and the yarn properties). The cooling step is known per se and may take place in the air to bring the temperature of the hot-melt adhesive to below 120°.

Two embodiments are described hereunder for forming a hot-melt adhesive that is suitable for use in a recyclable textile product.

In a first preferred embodiment (bonding adhesive 1), polypropylene recycled from PP carpet waste, with MFI of 22 g/10 minutes, is mixed with an inorganic peroxide Luperox 101PP20 (2,5-DIMETHYL-2,5-DI(TERT-BUTYLPEROXY)-HEXANE), in a double-screw extruder with vacuum and atmospheric venting, as well as vacuum degassing. After the reaction, a copolymer of polypropylene and ethylene that meets specific properties is added (Vistamaxx 8880), and an odour-neutralizing compound based on ZnO (Lithofil MM), and antioxidants are also added (Irganox 1010, Irgafos 168).

In the extruder there is a gradual increase in the mixing temperature from ambient temperature to a final extrusion temperature within the range 180°C-240°C, for a period of between 0.5 and 1.5 min, resulting in an MFI of 157 (ISO1133).

In a second preferred embodiment (bonding adhesive 2), polypropylene recycled from carpet waste is mixed with a radical-forming compound (organic peroxides) in a double-screw extruder at 180°C-240°C for 30-90 seconds in order to reach the desired extent of decrease in viscosity, a hydrocarbon-based tackifier (adhesiveness enhancer) (Eastman Piccotac E1100) and a microcrystalline wax (Shell, MMP). An odour-neutralizing additive is added (Lithofill MM, Lithos). The reaction temperature was min. 160°C and the reaction time was sufficient for carrying out the visbreaking reaction.

Table 1 below gives the composition of the bonding adhesives obtained:

**Table 1**

| | Adhesive 1 | Adhesive 2 |
|---|---|---|
| Composition (wt%) | r-PP 73% + vmaxx880 23.95% | r-PP 73% + MMP 10% + Piccotac E1105 13.95% |
| Recycled PP | 73.02 | 73.03 |
| Luperox 101PP20 | 0.66 | 0.66 |
| Irganox1010 (prim. antioxidant) | 0.15 | 0.15 |
| Irgafos 168 (sec. antioxidant) | 0.22 | 0.22 |
| Vistamaxx 8880 | 23.95 | |
| Microcrystalline wax MMP | | 10.00 |
| EASTMAN PICCOTAC E1100 | | 13.950 |
| Lithofill MM | 2.00 | 2.00 |
| | | |
| Total | 100.00 | 100.00 |

The complex melt viscosity of the two hot-melt adhesives obtained was determined according to standard ISO 6721-10:2015. The results are presented in the graph in Fig. 1. Bonding adhesive 1 (1) has a melt viscosity at 210°C of 17000 mPa*s and bonding adhesive (2) has a melt viscosity at 210°C of 11000 mPa*s.

The adhesives obtained are suitable for use in the manufacture of textile products as defined in claim 1. As can be seen from Fig. 1, the melt viscosity of the two adhesives was from 10 000 mPa*s to 120 000 mPa*s in a temperature range of 150°C-215°C, measured according to ISO 6721-10:2015.

With the first adhesive obtained, a number of samples were made, which were then compared with a reference product (textile product that was made with a conventional SBR latex as priming coat). The adhesive obtained was applied on a tufted product with a polypropylene sublayer and a top layer consisting of polypropylene pile yarns, once with loop pile and once with cut pile. Application by roller coating took place at a temperature of about 200°C. A priming coat of 220-400 gram/m² was applied. A sublayer (backing) of woven polypropylene (Action back) or a non-woven felt (70-450g/m²) made of (recycled) polypropylene was then applied under pressure.

The quality of the various samples, a carpet (loop pile or cut pile provided with either a secondary backing layer of woven polypropylene or a non-woven felt) is compared with a reference product made with a conventional SBR latex as priming coat. The values obtained for pile adhesion exceeds by at least 300% the minimum value of the internal standard (10N for loop pile and 5N for cut pile) that must be obtained for finishing with SBR latex, over the complete field of application of the hot-melt adhesive (10 000 mPa*s to 120 000 mPa*s in a temperature range of 150°C-215°C measured according to ISO 6721-10:2015).

It was found from internal tests that the pile adhesion is better than 10 N for loop pile and better than 5 N for cut pile, measured according to standard ISO4919. Delamination can be determined according to standard ISO 11857. Lisson and Vettermann test (EN1963) gives superior results in comparison with any standard product in the residential market.

The carpets obtained were shredded, extruded again and granulated. The granules obtained in pure form, or optionally mixed with other sources of polypropylene, are usable for the production of staple fibres and continuous filament yarn in bulk. The granules are also a preferred source for the selective dissolution of the polypropylene to remove all colour and other impurities, as described in US 10899906 B2.

Additional description of the products and terms:
The "visbreaking method" is a technology that is used for lowering the molecular weight and for lowering the molecular weight distribution of a polymer, in this case a polypropylene, by using radical-forming molecules in a reactive extrusion step. These molecules, which are familiar to a person skilled in the art, are organic peroxides (such as Arkema Luperox 101PP20, Polyvel CR20PX2, Struktol RP11, Struktol RP37) or hydroxylamine esters, for example such as Irgatec CR76.

Polypropylene copolymers as polymer modifier in this case, for homopolypropylene, are polymers with a lower viscosity, they improve the bonding of the fibres in the yarns, improve the flexibility, they are based on polypropylene with smaller amounts of other olefin comonomers. Some examples are VISTAMAXX 8880 from Exxon, Licocene 2502, Licocene 1502, Licocene 1302 from Clariant, Aerafin 17 and Aerafin 180 from Eastman, MF650Y from Lyondell Basel.

The adhesives are preferably hydrocarbon adhesives. These are relatively small molecules with a high glass transition temperature, which are used for improving the adhesiveness of hot-melt adhesives. Examples are Eastman Piccotac E1105, Piccotac 7590, Higree CL6100, Higree CL6200 and Higree DW100. Hydrocarbon process oils may be added (Petrona Process Oil P, Shell Risella X420).

Waxes improve the flow of the polymer melt and have an effect on the flexibility of the mixture. These waxes are hydrocarbon-based. As an example, the Shell microcrystalline wax grades MMP, LMP and HMP may be used.

Odour-neutralizing compounds are used in addition to the vacuum degassing of the extruder, to neutralize the odour-causing VOCs present in the polymer mixture. Some of these compounds are based on the presence of ZnO, others on zeolites, for example Lithos Lithofill MM is used. Other compounds are odour-masking products such as Struktol type products (company-specific formula) types RP53, SA 1536, 1259, RP17. In general, odour control may be achieved by means of odour-controlling agents selected from the following non-limiting group: nepheline syenite, silica gel, hydrogels, hard and soft clay, bentonite, clinoptilolite, hectorite, cation-exchanged clinoptilolite, cerium, caesium, chabazite, faujasite, gmelinite, brewsterite, calcium silicate, hydrotalcite, zinc or magnesium aluminium hydroxy carbonate, zinc oxide, zinc hydroxide, zinc carbonate, calcium oxide, calcium hydroxide, calcium carbonate, potassium metaphosphate, silver oxide, magnesium hydroxide, magnesium oxide, copper oxide, iron and iron oxide, sorbitol, glucitol, mannitol, glucose, dextrose, dextrin, allophane, silica, sodalite, silicone oxide, aluminium oxide, natural zeolites, manganese dioxide, nano zinc oxide and nano titanium and compositions thereof.

Processing aids may also be added to improve the flow properties of the compound. An example is Struktol 251, a unique blend of amides and metal soap. EBS (ethyl bis-stearamide) or other lubricants may be used.

## Claims

1. Method for manufacturing a hot-melt adhesive for textile products, **characterized in that** it comprises the following steps: comminution of carpets made of polypropylene to polypropylene granules, extrusion of the granules in the presence of peroxides in order to lower the viscosity to a melt viscosity from 10 000 mPa*s to 120 000 mPa*s at a temperature of 210°C measured according to ISO 6721-10:2015.

2. Method according to claim 1, **characterized in that** the hot-melt adhesive comprises at least 35 wt% and at most 90 wt% of isotactic polypropylene.

3. Use of an isotactic polypropylene hot-melt adhesive that has a melt viscosity from 10 000 mPa*s to 120 000 mPa*s at a temperature of 210°C measured according to ISO 6721-10:2015, in the forming of a textile product comprising a primary backing layer with yarns or fibres made of an isotactic polypropylene material and a secondary backing layer made of an isotactic polypropylene material, wherein the primary and secondary backing layers are firmly bonded together by said isotactic polypropylene hot-melt adhesive.

4. Method for forming a textile product, comprising the following steps:
- providing a primary backing layer with yarns or fibres made of an isotactic polypropylene material;
- providing a secondary backing layer made of an isotactic polypropylene material,
- bringing the adhesive into contact with the primary or secondary layer, **characterized in that** the adhesive is an isotactic polypropylene hot-melt adhesive that has a melt viscosity from 10 000 mPa*s to 120 000 mPa*s at a temperature of 210°C measured according to ISO 6721-10:2015, wherein the hot-melt adhesive is applied in one step by roller coating, wherein during application the hot-melt adhesive has a temperature of at least 150°C and at most 215°C.
